# FASCICULE DE BREVET EUROPEEN

(11) **EP 3 325 787 B1**
(45) Date de publication et mention de la délivrance du brevet: **11.05.2022**
(21) Numéro de dépôt: 16757279.1
(22) Date de dépôt: 19.07.2016
(51) Int. Cl.: F02C 7/224, F02C 7/232, F02C 7/236, F02C 9/26

(54) **DOSEUR DE CARBURANT PROTÉGÉ DU GIVRAGE**
GEGEN VEREISUNG GESCHÜTZTE KRAFTSTOFFMESSVORRICHTUNG
FUEL METERING DEVICE PROTECTED AGAINST ICING

(30) Priorité: 21.07.2015 FR 1556909; 13.08.2015 US 201514825566
(43) Date de publication de la demande: 30.05.2018
(73) Titulaire: Safran Aircraft Engines, 75015 Paris (FR)
(72) Inventeur: BROCARD, Jean-Marie, 77550 Moissy-Cramayel Cedex (FR); DELDALLE, Régis, Michel, Paul, 77550 Moissy-Cramayel Cedex (FR); BARREAU, Anne, Marie, Cécile, 77550 Moissy-Cramayel Cedex (FR); MOUTON, Pierre, Charles, 77550 Moissy-Cramayel Cedex (FR)
(74) Mandataire: Cabinet Beau de Loménie
(86) Numéro de dépôt international: PCT/FR2016/051848
(87) Numéro de publication internationale: WO 2017/013347

(56) Documents cités:
- FR-A1- 2 825 120
- US-A- 5 205 537
- US-A- 5 983 621
- US-A1- 2007 180 813
- US-A1- 2009 301 575

## Description

### Arrière-plan de l'invention

La présente invention se rapporte au domaine général des doseurs de carburant à ouverture géométrique variable. Elle trouve une application privilégiée aux doseurs de carburant équipant les circuits d'alimentation en carburant d'un moteur d'aéronef, et plus particulièrement aux circuits délivrant du carburant pour l'alimentation d'injecteurs de combustion du moteur.

De façon générale, un circuit d'alimentation en carburant d'un moteur d'aéronef comprend un système de pompage constitué d'une pompe basse pression reliée en amont au réservoir de carburant de l'aéronef et associée en aval à une pompe haute pression qui est entraînée par le moteur via une boîte de relais d'accessoires (ou AGB pour Accessories Gear Box »). En aval de la pompe haute pression, le circuit d'alimentation en carburant se sépare en deux branches, l'une des branches comprenant une soupape de dérivation et un doseur de carburant permettant de réguler le débit de carburant alimentant les injecteurs de combustion du moteur, et l'autre branche comprenant un échangeur de chaleur et renvoyant le carburant vers des actionneurs de géométries variables du moteur (par exemple des vannes de décharge d'air ou des vannes de commande d'aubes à angle de calage variable). L'excédent de débit carburant généré par la pompe haute pression est retourné à l'entrée de cette pompe par la soupape de dérivation, ce qui contribue partiellement au réchauffage du circuit, particulièrement aux bas débits du moteur où le taux de recirculation est maximum.

Un tel circuit d'alimentation en carburant doit être protégé contre le risque de givrage de l'eau contenue dans le carburant. En effet, la pression et la température rencontrées au cours d'un vol peuvent provoquer le passage de l'eau de l'état liquide à l'état solide et entraîner des dysfonctionnements du circuit d'alimentation en carburant.

Dans les architectures classiques de circuits d'alimentation en carburant, les organes les plus sensibles au givrage sont alimentés par du carburant réchauffé à une température positive par un échangeur de chaleur. Cependant, lorsque l'huile est utilisée pour réchauffer le carburant, la puissance thermique disponible dans le système d'huile du moteur ne permet de réchauffer suffisamment, à partir d'un échangeur huile/carburant dédié, que le carburant pour les petits débits envoyés vers les actionneurs de géométries variables du moteur. En effet, cette puissance thermique n'est pas suffisante pour réchauffer le carburant pour les grands débits traversant le doseur de carburant, par exemple pendant les phases de décollage et de montée de l'aéronef. Or, les organes que sont la soupape de dérivation, le doseur de carburant et les injecteurs de combustion du moteur peuvent être sensibles au givrage du carburant.

Pour insensibiliser la soupape de dérivation au givrage du carburant, il est connu de recourir à une soupape asservie avec une grande marge d'effort et avec un détecteur réchauffé de différentiel de pression aux bornes de la soupape. Quant aux injecteurs de combustion, ils peuvent généralement fonctionner pendant une durée importante en conditions givrantes avant de conduire à un dysfonctionnement du moteur. Cette durée est généralement plus grande que le temps de la partie de mission où le carburant se trouve dans des conditions givrantes.

En revanche, le doseur de carburant est un organe qu'il est difficile de rendre insensible au givrage du carburant, en particulier lorsqu'il s'agit d'un doseur de carburant muni d'une fente de dosage à profil de passage exponentiel. Un tel doseur présente l'avantage de permettre d'obtenir une grande précision dans le dosage de carburant aux faibles débits. Toutefois, lorsqu'il est alimenté par du carburant en condition givrante, la partie de faible largeur de la fente du doseur a tendance à se colmater partiellement à cause de particules de glace venant s'y agglomérer. Plus précisément, ce colmatage partiel apparaît typiquement pour les grands débits (pour lesquels le carburant est à température négative) dans la partie étroite de la fente. Il en résulte qu'en cas de retour vers des petits débits après un fonctionnement à fort débit (typiquement en cas de retour en phase de ralenti du moteur), il existe un risque non négligeable que le débit carburant injecté devienne inférieur à la limite fixée par la butée d'extinction, et donc un risque d'extinction de la chambre de combustion du moteur.

La demande de brevet publiée FR 2825120 A1 divulgue un doseur de carburant muni d'une fente de dosage à profil de passage exponentiel, le doseur étant à géométrie cylindrique avec un élément mobile sous la forme d'un piston. La fente de dosage est scindée en deux parties espacées circonférentiellement l'une de l'autre et séparées par des moyens d'étanchéité, de façon à créer une sortie pour les petits débits séparée de la sortie pour les grands débits. La sortie dédiée aux petits débits correspond à la partie étroite de la fente, tandis que la sortie dédiée aux grands débits correspond à la plus grande partie de la fente. Un tel dispositif est particulièrement adapté pour la limitation de la survitesse par l'obturation uniquement de la sortie dédiée aux grands débits.

Toutefois, ce dispositif connu ne permet pas, lorsqu'il est alimenté par du carburant en condition givrante, d'empêcher la sortie dédiée aux petits débits, c'est à dire la partie de faible largeur de la fente, de se colmater partiellement à cause de particules de glace venant s'y agglomérer. Un autre doseur de carburant selon l'art antérieur est connu de US 2007/180813 A1.

### Objet et résumé de l'invention

La présente invention a donc pour but principal de pallier de tels inconvénients en proposant un doseur de carburant qui soit tolérant au givrage du carburant.

Ce but est atteint grâce à un doseur de carburant apte à fonctionner en condition de givrage du carburant selon la revendication 1, ce doseur de carburant, comprenant un élément mobile comportant au moins une section de passage de carburant s'ouvrant en amont vers un conduit d'alimentation en carburant et débouchant à l'aval vers un conduit d'utilisation par une fente de dosage à profil évasé ayant une section de passage étroit et une section de passage large, l'élément mobile étant apte à être déplacé par rapport à un élément fixe uniquement sur une course prédéterminée entre une position de petit débit dans laquelle la fente de dosage est en grande partie obstruée et une position de grand débit dans laquelle la fente de dosage est en grande partie découverte, la fente de dosage étant pratiquée dans l'élément fixe ou dans l'élément mobile et son obstruction étant obtenue par le recouvrement de la fente par une paroi de l'élément mobile ou de l'élément fixe. Conformément à l'invention, le doseur comporte en outre des moyens d'obstruction pour obstruer au moins en partie la section de passage étroit de la fente de dosage lorsque le doseur est en position de grand débit sans jamais obstruer la section de passage large de ladite fente de dosage.

A faible débit, le carburant est typiquement à température positive, de sorte que le risque de colmatage de la fente de dosage du doseur (par agglomération de particules de glace) est inexistant. A grand débit, le carburant est au contraire à température négative, ce qui provoque la formation de particules de glace dans le carburant. Dans cette position de grand débit, la fente de dosage du doseur selon l'invention est obstruée dans sa section de passage la plus étroite, ce qui permet d'éviter que les particules de glace ne viennent s'y agglomérer (le reste de la fente de dosage étant plus large, les particules de glace n'ont pas la capacité de s'y agglomérer). Lorsque le débit de carburant du doseur revient de cette position de grand débit à sa position de petit débit, la partie la plus étroite de la fente de dosage qui devient la seule section de passage pour le carburant n'est donc pas obstruée, alors que le bilan thermique huile carburant permet de quitter les conditions givrantes, ce qui permet d'éviter tout risque d'extinction de la chambre de combustion du moteur. Par ailleurs, les moyens d'obstruction sont conformés pour ne jamais obstruer une quelconque partie de la section de passage large de la fente de dosage, et ce quelle que soit la position du doseur.

Tout risque de colmatage de la fente de dosage du doseur de carburant selon l'invention peut être évité sans pour autant affecter le fonctionnement du doseur de carburant. En d'autres termes, l'invention permet d'éviter le colmatage de la section de passage étroite de la fente de dosage qui se produit à grand débit et de retrouver à faible débit une corrélation entre le débit et la position du doseur qui ne soit pas affectée par le givrage.

Selon un premier mode de réalisation, la fente de dosage est pratiquée dans l'élément fixe et débouche dans la section de passage de carburant par l'intermédiaire d'une lumière pratiquée dans l'élément mobile et délimitée longitudinalement entre une arête principale et une arête secondaire, ladite lumière ayant une longueur plus courte qu'une longueur de la fente de dosage et étant apte à se déplacer en regard de celle-ci de sorte à obstruer au moins en partie la section de passage étroit de la fente de dosage lorsque le doseur est en position de grand débit.

Dans ce premier mode de réalisation, l'élément fixe peut former une douille qui comprend une fenêtre s'ouvrant en amont vers le conduit d'alimentation en carburant et débouchant dans la section de passage de carburant, ladite fenêtre étant décalée longitudinalement par rapport à la fente de dosage.

Dans ce cas, de façon avantageuse, l'élément mobile forme un tiroir apte à coulisser longitudinalement dans la douille, et l'arête secondaire est formée par un épaulement faisant saillie dans la section de passage de carburant entre deux portées du tiroir. Cet épaulement peut être un élément rapporté sur le tiroir (ce qui rend l'invention facilement adaptable aux doseurs de carburant existant).

Selon un deuxième mode de réalisation, l'élément fixe comprend une fenêtre s'ouvrant en amont vers le conduit d'alimentation en carburant et débouchant dans la section de passage de carburant, ladite fenêtre étant, de façon alternative, alignée longitudinalement avec la fente de dosage.

Selon un troisième mode de réalisation, l'élément fixe comprend en outre un orifice débouchant dans la section de passage de carburant et s'ouvrant vers un conduit d'utilisation, ledit orifice étant obstrué par l'arête secondaire de la lumière de l'élément mobile lorsque celui-ci est en position de grand débit et découvert lorsqu'il est en position de petit débit.

Dans ce cas, l'arête secondaire de la lumière de l'élément mobile peut avantageusement présenter un profil profilé de sorte à permettre d'obstruer l'orifice dès que la section de passage étroit de la fente de dosage commence à être obstruée. De plus, dans une variante de réalisation, l'élément fixe peut comprendre en outre un orifice s'ouvrant vers un conduit d'utilisation, et l'élément mobile peut comprendre une lumière additionnelle au travers de laquelle la section de passage de carburant débouche vers le conduit d'utilisation, ladite lumière additionnelle étant apte à se déplacer en regard dudit orifice de sorte à pouvoir l'obstruer lorsque le doseur est en position de grand débit.

Selon un quatrième mode de réalisation, la fente de dosage est pratiquée dans l'élément mobile en regard de la section de passage de carburant et débouche vers le conduit d'utilisation par l'intermédiaire d'une lumière pratiquée dans l'élément fixe et délimitée longitudinalement entre une arête principale et une arête secondaire, ladite lumière de l'élément fixe ayant une longueur plus courte qu'une longueur de la fente de dosage et la fente de dosage étant apte à se déplacer en regard de la lumière de sorte à ce qu'au moins une partie de la section de passage étroit de la fente de dosage soit obstruée lorsque le doseur est en position de grand débit.

Dans ce quatrième mode de réalisation, l'élément fixe peut comprendre une fenêtre s'ouvrant en amont vers le conduit d'alimentation en carburant et débouchant dans la section de passage de carburant, ladite fenêtre étant décalée longitudinalement par rapport à la lumière.

L'élément mobile peut comporter au moins deux portées et ladite au moins une section de passage de carburant est située entre lesdites portées.

La fente de dosage peut avoir une section de passage étroit s'évasant jusqu'à une section de passage large.

La section de passage étroit de la fente de dosage peut posséder une largeur présentant un maximum compris entre 0,5 mm et 1 mm.

L'invention a également pour objet un circuit d'alimentation en carburant d'un moteur d'aéronef, comportant un système de pompage basse pression relié à un système de pompage haute pression, et un doseur de carburant tel que défini précédemment dont la section de passage de carburant débouche vers l'aval vers des injecteurs de chambre de combustion du moteur.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique d'un circuit d'alimentation en carburant d'un moteur d'aéronef auquel s'applique l'invention ;
- les figures 2A-2B et 3A-3B représentent de façon schématique un doseur de carburant selon un premier mode de réalisation de l'invention dans sa position de petit débit et de grand débit, respectivement ;
- les figures 4A-4B et 5A-5B représentent un doseur de carburant selon un deuxième mode de réalisation de l'invention dans sa position de petit débit et de grand débit, respectivement ;
- les figures 6, 7A-7B, 8A-8B et 9A-9B-9C représentent un doseur de carburant selon un troisième mode de réalisation de l'invention dans différentes positions ;
- les figures 10A-10B et 11A-11B représentent de façon schématique un doseur de carburant selon un quatrième mode de réalisation de l'invention dans sa position de petit débit et de grand débit, respectivement ; et
- la figure 12 représente en perspective et en éclaté un doseur de carburant selon un exemple qui n'entre pas dans le cadre de l'invention revendiquée.

### Description détaillée de l'invention

Un doseur de carburant conforme à l'invention est décrit ci-après dans le cadre d'une application à un circuit d'alimentation en carburant d'un moteur d'avion à turbine à gaz. Toutefois, le domaine d'application de l'invention s'étend aux circuits d'alimentation en carburant d'autres aéronefs, notamment des hélicoptères et à des moteurs d'aéronefs autres qu'à turbine à gaz.

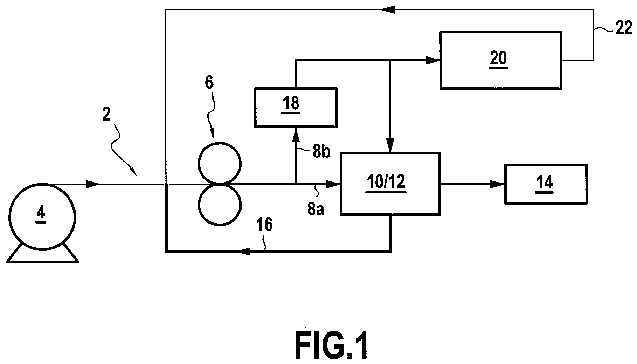

Le circuit d'alimentation en carburant 2 représenté sur la figure 1 comporte typiquement un système de pompage basse pression 4 relié en amont à un réservoir de carburant (non représenté) de l'aéronef et associé en aval à une pompe haute pression 6 qui est généralement entraînée par le moteur via une boîte de relais d'accessoires (ou AGB pour « Accessories Gear Box » - non représentée sur la figure 1).

En aval de la pompe haute pression 6, le circuit d'alimentation en carburant 2 se sépare en deux branches 8a, 8b. L'une des branches 8a comprend une soupape de dérivation 10 et un doseur de carburant 12 permettant de réguler le débit de carburant alimentant les injecteurs de combustion 14 du moteur, et renvoyant le carburant en excès dans le circuit en amont de la pompe haute pression 6, via une boucle de recirculation 16.

L'autre branche 8b comprend un échangeur de chaleur 18 et renvoie le carburant vers des actionneurs de géométries variables 20 du moteur (par exemple des vannes de décharge d'air ou des aubes à angle de calage variable). Le carburant utilisé est renvoyé en amont de la pompe haute pression 6, via une autre boucle de recirculation 22.

Les éléments fixe et mobile du doseur objet de cette invention peuvent prendre différentes formes, comme des fourrures, des tiroirs, des boisseaux, des plaques en rotation ou en translation, etc. Pour expliquer le concept de l'invention, dont l'application ne se limite pas à cette seule forme, le doseur qui sera décrit ci-après comprendra un tiroir comme élément mobile et une douille comme élément fixe.

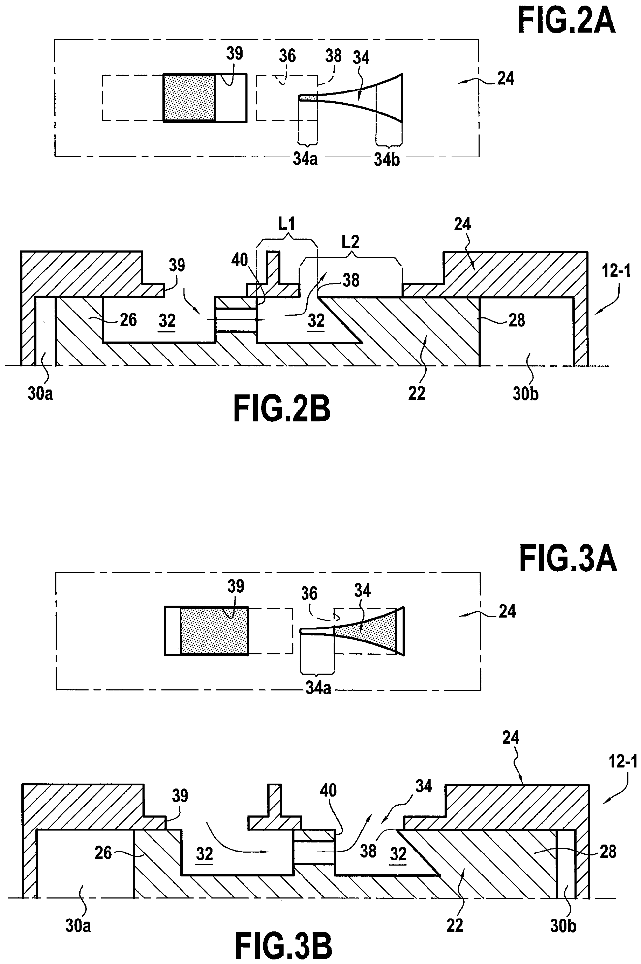

Les figures 2A-2B et 3A-3B représentent, de façon schématique, un doseur de carburant 12-1 selon un premier mode de réalisation de l'invention pouvant être utilisé pour le circuit d'alimentation en carburant 2 précédemment décrit.

De façon connue en soi, le doseur de carburant 12-1 comprend un tiroir 22 qui peut coulisser à l'intérieur d'une douille 24, par exemple cylindrique. Le tiroir 22 comprend deux portées 26, 28 qui peuvent partager le volume interne de la douille 24 en deux chambres de commande 30a, 30b qui sont situées aux deux extrémités de la douille, et en au moins une section de passage de carburant 32 qui est située entre les portées 26, 28. Les chambres de commande 30a, 30b sont reliées par des lignes de commande à une servovalve (non représentée) qui permet de commander un déplacement du tiroir à l'intérieur de la douille. Bien entendu, d'autres modes d'actionnement du tiroir du doseur peuvent être envisagés (par exemple un actionnement électrique).

Par ailleurs, la section de passage de carburant 32 du doseur s'ouvre en amont vers un conduit d'alimentation en carburant (raccordé à la première branche 8a du circuit d'alimentation en carburant) et débouche à l'aval vers un conduit d'utilisation (raccordé aux injecteurs de combustion 14 du moteur). Bien entendu, la section de passage de carburant du doseur pourrait déboucher vers l'aval vers plusieurs conduits d'utilisation indépendants, de même que le doseur pourrait comprendre plusieurs sections de passage de carburant débouchant vers différents conduits d'utilisation.

Plus précisément, la section de passage de carburant 32 débouche vers le conduit d'utilisation par l'intermédiaire d'une fente de dosage 34 dite « à profil croissant, par exemple exponentiel », c'est-à-dire une fente de dosage qui présente une section de passage étroit 34a s'évasant selon un profil évasé, par exemple de forme exponentielle, jusqu'à une section de passage plus large 34b. Ce type de fente de dosage permet d'assurer la précision requise de dosage pour le fonctionnement du moteur sur l'ensemble de la plage de débit.

Dans le premier mode de réalisation des figures 2A-2B et 3A-3B, la fente de dosage 34 est pratiquée dans la douille 24 et débouche dans la section de passage de carburant 32 du doseur par l'intermédiaire d'une lumière 36 pratiquée dans le tiroir et délimitée longitudinalement entre une arête principale 38 et une arête secondaire 40.

L'arête principale 38 est ici formée par un prolongement de l'une des portées 28 du tiroir, tandis que l'arête secondaire 40 est formée par un épaulement faisant saillie dans la section de passage 32 du doseur de carburant entre les deux portées 26, 28 du tiroir. Cette arête secondaire 40 est positionnée de sorte à délimiter avec l'arête principale une lumière 36 qui présente une longueur L1 plus courte que la longueur L2 de la fente de dosage 34 (la longueur de la fente de dosage étant mesurée entre sa section de passage étroit 34a et sa section de passage large 34b). Ainsi, lors du coulissement du tiroir à l'intérieur de la douille, la lumière 36 se déplace en regard de la fente de dosage 34.

La douille 24 comprend également une fenêtre 39 qui s'ouvre en amont vers le conduit d'alimentation en carburant et qui débouche dans la section de passage de carburant 32, cette fenêtre 39 étant décalée longitudinalement par rapport à la fente de dosage 34.

Le fonctionnement d'un tel doseur de carburant 12-1 est le suivant. En position de petit (ou faible) débit (figures 2A-2B), le tiroir 22 du doseur de carburant coulisse (sur commande de la servovalve) à l'intérieur de la douille 24 de telle sorte que la fente de dosage 34 soit en grande partie obstruée par une portion de paroi du tiroir s'étendant depuis l'arête principale 38 vers la portée 28 du tiroir (c'est-à-dire que seule la section de passage étroit 34a de la fente de dosage est découverte et permet le passage du carburant depuis la section de passage de carburant 32 vers le conduit d'utilisation, le reste de la fente de dosage étant masqué par ladite portion de paroi du tiroir).

Dans cette position de petit débit, on notera également que la fenêtre 39 pratiquée dans la douille 24 et s'ouvrant en amont vers le conduit d'alimentation en carburant est en partie obstruée par l'épaulement formant l'arête secondaire 40 du tiroir du doseur.

Lorsque la servovalve commande au doseur de carburant de se positionner à grand débit (figures 3A-3B), le tiroir du doseur de carburant coulisse à l'intérieur de la douille 24 de telle sorte que la fente de dosage 34 soit en grande partie découverte (c'est-à-dire que seule la section de passage étroit 34a de la fente de dosage est masquée par l'épaulement formant l'arête secondaire 40 du tiroir, le reste de la fente de dosage étant découverte et permettant le passage du carburant depuis la section de passage de carburant 32 vers le conduit d'utilisation).

Plus précisément, dans cette position de grand débit, l'épaulement formant l'arête secondaire 40 du tiroir du doseur de carburant vient masquer la section de passage étroit 34a de la fente de dosage pour éviter tout passage de carburant par cette partie de la fente de dosage.

Le déplacement du tiroir est prévu préférablement de façon à ce que l'arête principale 38 de la lumière 36 pratiquée dans le tiroir n'atteigne jamais la position du bord d'extrémité de plus grande largeur de la fente de dosage 34, ce bord d'extrémité de la fente restant donc masqué par l'arête principale 38. En d'autres termes, dans une position extrême du tiroir correspondant au débit maximal, il est prévu un petit espacement dans la direction axiale entre l'arête principale 38 et ce bord d'extrémité de la fente de dosage 34. En effet, il est important que le système de régulation du débit puisse contrôler le débit maximal dans la position extrême du tiroir, c'est-à-dire notamment que le système de régulation puisse encore augmenter dans une certaine mesure ce débit maximal en pilotant le tiroir légèrement au-delà de sa position extrême. En d'autres termes, cette position extrême du tiroir n'est pas une position de butée de fin de course du tiroir, car une telle position de butée impliquerait la perte du contrôle par le système de régulation du débit. Il peut être considéré que cette position extrême est une position de quasi fin de course du tiroir

En conséquence, tout risque que des particules de glace provenant du givrage du carburant ne viennent s'agglomérer dans la section de passage étroit de la fente de dosage est écarté. De la sorte, lorsque le doseur de carburant repasse de cette position de grand débit à la position de petit débit des figures 2A-2B où seule la section de passage étroit 34a de la fente de dosage est découverte, le passage de carburant par cette section de passage n'est pas perturbé par l'agglomération de particules de glace.

On notera également que dans cette position de grand débit, la fenêtre 39 pratiquée dans la douille 24 et s'ouvrant en amont vers le conduit d'alimentation en carburant n'est plus obstruée par l'épaulement formant l'arête secondaire 40 du tiroir du doseur.

On notera encore que l'épaulement formant l'arête secondaire 40 du tiroir du doseur de carburant (qui vient masquer la section de passage étroit 34a de la fente de dosage en position de grand débit) peut être un élément rapporté ou former une seule et même pièce avec le tiroir 22 du doseur de carburant).

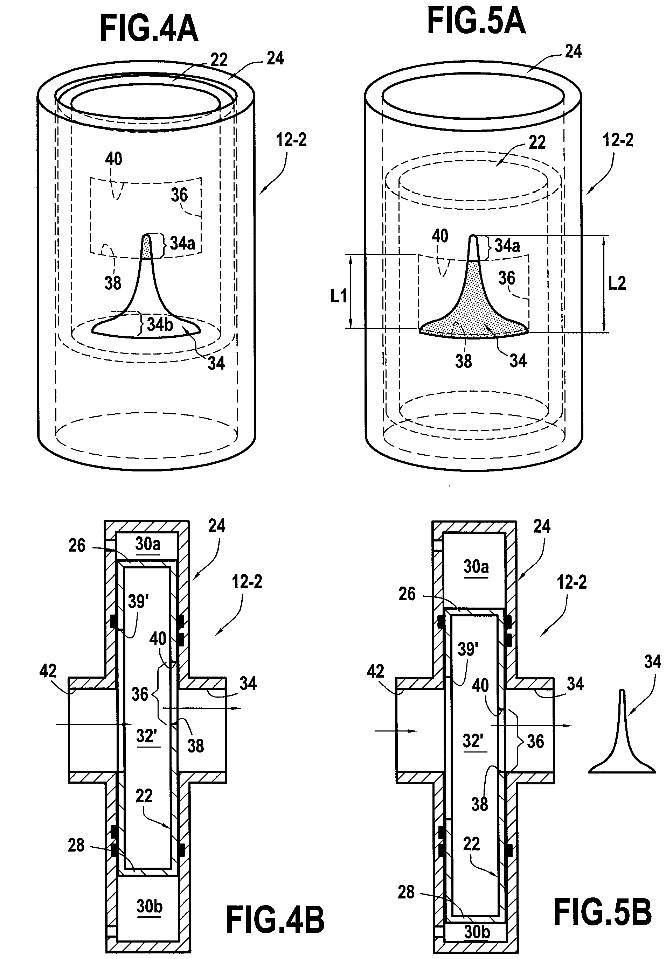

Les figures 4A-4B et 5A-5B représentent, de façon schématique, un doseur de carburant 12-2 selon une deuxième mode de réalisation du premier mode de réalisation.

Ce deuxième mode de réalisation se distingue du premier mode de réalisation de l'invention par la façon dont sont agencés le conduit d'alimentation en carburant et le conduit d'utilisation. Par rapport au mode de réalisation précédemment décrit où ces conduits débouchent dans le doseur d'un même « côté » de la douille en étant décalés longitudinalement l'un par rapport à l'autre, ces conduits sont ici alignés longitudinalement l'un par rapport à l'autre et débouchent dans le doseur selon deux côtés opposés, respectivement un côté amont et un côté aval, de celui-ci.

Dans cette configuration, la section de passage de carburant 32' est centrale et débouche vers l'amont dans le conduit d'alimentation en carburant et vers l'aval dans le conduit d'utilisation, ces conduits étant alignés l'un avec l'autre. A cet effet, la douille 24 comprend une fenêtre 42 qui s'ouvre en amont vers le conduit d'alimentation en carburant et qui est aligné longitudinalement avec la fente de dosage 34 (c'est-à-dire que les projections orthogonales de la fente de dosage et de la fenêtre 42 sur l'axe longitudinal du doseur coïncident sensiblement). Le tiroir 22 comprend également une lumière 39' qui débouche en permanence dans la section de passage 32' quelle que soit la position du tiroir.

On notera que les représentations en perspective du doseur de carburant 12-2 sur les figures 4A et 5A représentent uniquement le côté aval du doseur, de sorte que la lumière 39' du tiroir et la fenêtre 42 de la douille situées du côté amont ne sont pas représentées.

Toujours dans ce deuxième mode de réalisation, la fente de dosage 34 débouche dans la section de passage de carburant 32' du doseur par l'intermédiaire de la lumière 36 pratiquée dans le tiroir 22 et délimitée longitudinalement entre une arête principale 38 et une arête secondaire 40.

L'arête principale 38 est ici formée par un bord d'une paroi du tiroir dans le prolongement de l'une des portées 28 du tiroir, tandis que l'arête secondaire 40 est formée par le prolongement de l'autre portée 26 du tiroir. L'arête secondaire 40 est également positionnée de sorte à délimiter avec l'arête principale une lumière 36 qui présente une longueur L1 plus courte que la longueur L2 de la fente de dosage 34.

L'alignement longitudinal de la fenêtre 42 de la douille avec la fente de dosage 34 n'est ici pas indispensable. En effet, il est possible de prévoir par exemple que la section du conduit d'alimentation en carburant ait une dimension différente de celle du conduit d'utilisation, selon la direction longitudinale et/ou la direction circonférentielle du doseur.

Le fonctionnement du doseur de carburant 12-2 selon ce deuxième mode de réalisation est similaire à celui décrit précédemment.

En position de petit débit (figures 4A-4B), le tiroir 22 du doseur de carburant 12-2 coulisse à l'intérieur de la douille 24 de sorte que la fente de dosage 34 soit en grande partie obstruée par une portion de paroi du tiroir s'étendant depuis l'arête principale 38 vers la portée 28 du tiroir (seule la section de passage étroit 34a de la fente de dosage est découverte, le reste de la fente de dosage étant masqué par ladite portion de paroi du tiroir).

En position de grand débit (figures 5A-5B), le tiroir 22 du doseur de carburant coulisse de telle sorte que la fente de dosage 34 soit en grande partie découverte (c'est-à-dire que seule la section de passage étroit 34a de la fente de dosage est masquée par une portion de paroi du tiroir s'étendant depuis l'arête secondaire 40 vers la portée 26 du tiroir, le reste de la fente de dosage étant découverte et permettant le passage du carburant depuis la section de passage de carburant 32 vers le conduit d'utilisation). Ainsi, dans cette position de grand débit, tout risque que des particules de glace provenant du givrage du carburant ne viennent s'agglomérer dans la section de passage étroit 34a de la fente de dosage est écarté.

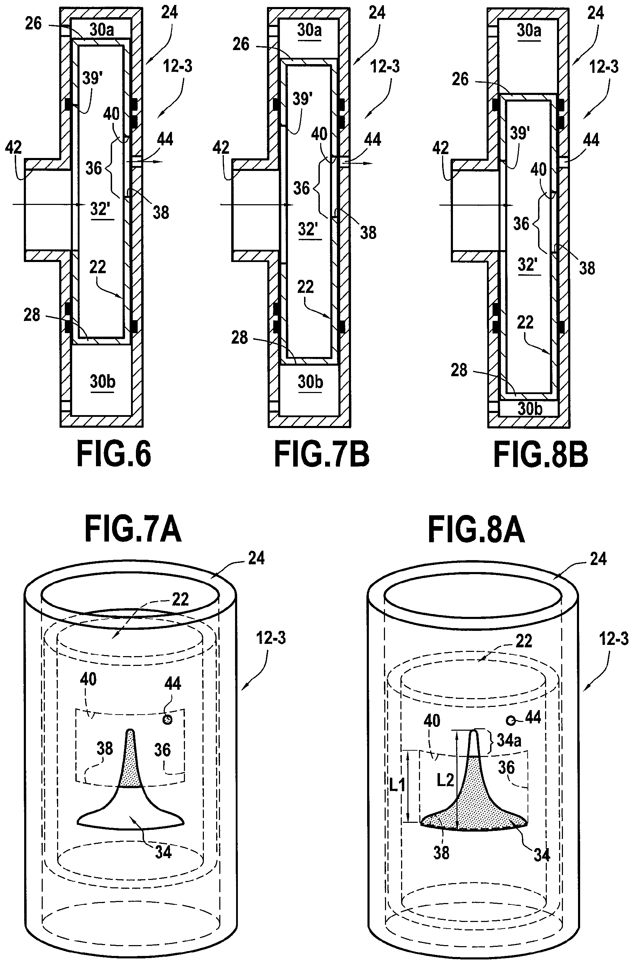

En liaison avec les figures 6, 7A-7B et 8A-8B, on décrira maintenant un doseur de carburant 12-3 selon un troisième mode de réalisation de l'invention.

Ce troisième mode de réalisation se distingue du deuxième mode de réalisation en ce que la douille 24 comprend en outre un orifice 44 débouchant dans la section de passage de carburant 32' et s'ouvrant vers le conduit d'utilisation. Cet orifice 44 permet typiquement d'ajuster le réglage du débit minimum de carburant délivré par le doseur vers le conduit d'utilisation.

L'orifice 44 est positionné sur la douille 24 de sorte à être découvert lorsque le tiroir est en position de petit débit (figure 6) et à débit modéré (c'est-à-dire entre le petit et le grand débit - figures 7A-7B), et obstrué par l'arête secondaire 40 de la lumière 36 du tiroir 22 lorsque le tiroir est en position de grand débit (figures 8A-8B).

Ainsi, dans la position de grand débit, tout risque que des particules de glace provenant du givrage du carburant viennent s'agglomérer dans la section de passage étroit 34a de la fente de dosage 34 et dans l'orifice 44 est écarté.

Par ailleurs, dans cet exemple de réalisation, lorsque le doseur de carburant passe de la position de petit débit à la position de grand débit, l'orifice 44 devient obstrué peu avant l'obstruction de la section de passage étroit 34a de la fente de dosage par l'arête secondaire.

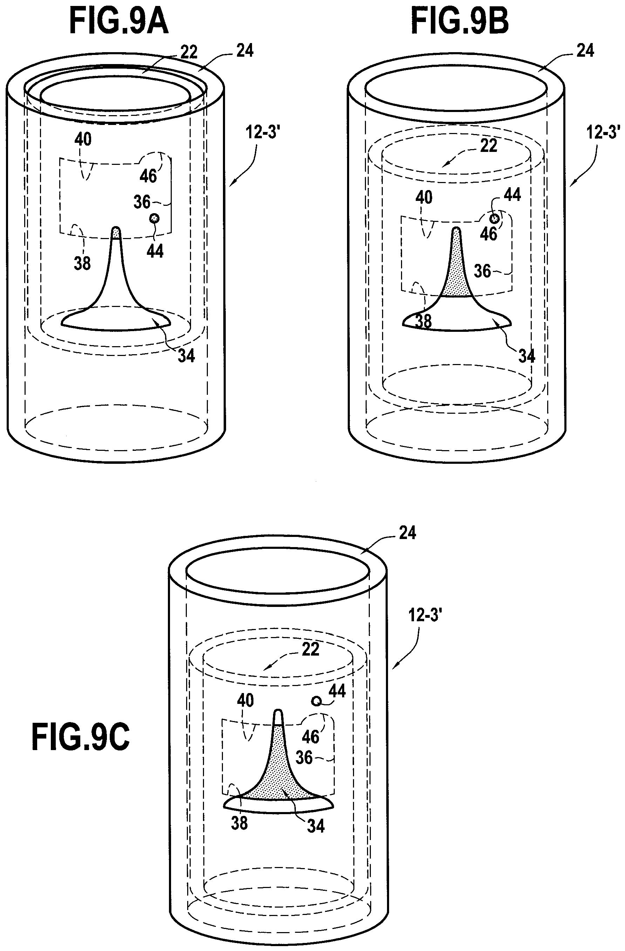

Dans une variante de réalisation de ce troisième mode de réalisation représentée sur les figures 9A à 9C, l'arête secondaire 40 de la lumière 36 du tiroir 22 du doseur 12-3' présente un profil 46 profilé de sorte à permettre d'obstruer l'orifice 44 dès que la section de passage étroit 34a de la fente de dosage 34 commence à être obstruée par l'arête secondaire.

Ainsi, la figure 9A représente le doseur 12-3' dans une position de petit débit dans laquelle à la fois la section de passage étroit 34a de la fente de dosage 34 et l'orifice 44 sont découverts de sorte à permettre le réglage du débit minimum de carburant vers le conduit d'utilisation. Dans la position de débit modéré de la figure 9B, l'orifice 44 reste découvert tandis que la fente de dosage se découvre. Enfin, avant de parvenir à la position de grand débit, l'orifice 44 se trouve obstrué par l'arête secondaire 40 dès que la section de passage étroit 34a de la fente de dosage 34 commence à être obstruée par ladite arête secondaire (voir la figure 9C représentant par exemple 80% du grand débit).

Dans une alternative (non représentée sur les figures) de ce troisième mode de réalisation, le tiroir du doseur de carburant comprend une lumière additionnelle (indépendante de la lumière 36 précédemment décrite) au travers de laquelle la section de passage de carburant est apte à déboucher vers un conduit d'utilisation par l'intermédiaire de l'orifice de réglage du débit minimum de carburant. Cette lumière additionnelle est apte à se déplacer en regard dudit orifice de sorte à pouvoir l'obstruer lorsque le tiroir est en position de grand débit.

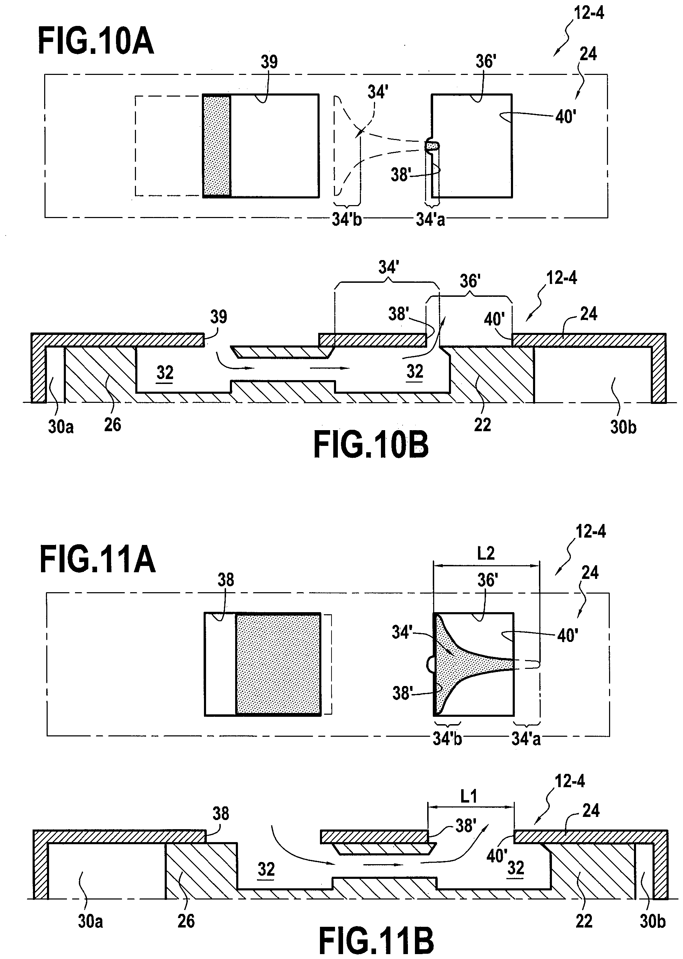

En liaison avec les figures 10A-10B et 11A-11B, on décrira maintenant un doseur de carburant 12-4 selon un quatrième mode de réalisation de l'invention.

Le doseur de carburant 12-4 de ce quatrième mode de réalisation de l'invention se distingue de ceux précédemment décrits notamment en ce que la fente de dosage 34' est pratiquée dans le tiroir 22 (et non dans la douille 24) en regard de la section de passage de carburant 32 et débouche vers le conduit d'utilisation par l'intermédiaire d'une lumière 36' pratiquée dans la douille 24 (et non dans le tiroir) et délimitée longitudinalement entre une arête principale 38' et une arête secondaire 40'.

L'arête principale 38' et l'arête secondaire 40' sont ici formées par des bords de la douille 24 délimitant longitudinalement la lumière 36', cette dernière présentant une longueur L1 (entre les bords 38', 40') plus courte que la longueur L2 de la fente de dosage 34' (entre sa section de passage étroit 34'a et sa section de passage large 34'b). Ainsi, lors du coulissement du tiroir 22 à l'intérieur de la douille 24, la fente de dosage 24' se déplace en regard de la lumière 36'.

La douille 24 comprend également une fenêtre 39 s'ouvrant en amont vers le conduit d'alimentation en carburant et débouchant dans la section de passage de carburant 32, cette fenêtre 39 étant décalée longitudinalement par rapport à la lumière 36'.

Le fonctionnement du doseur de carburant 12-4 selon ce quatrième mode de réalisation est le suivant. En position de petit débit (figures 6A-6B), le tiroir 22 du doseur de carburant coulisse à l'intérieur de la douille 24 de telle sorte que la fente de dosage 34' soit en grande partie obstruée par une portion de paroi de la douille s'étendant depuis l'arête principale 38' de la lumière 36' de la douille vers la fenêtre 39 (seule la section de passage étroit 34'a de la fente de dosage est découverte et permet le passage du carburant depuis la section de passage de carburant 32 vers le conduit d'utilisation).

Dans la position de grand débit (figures 10A-10B), le tiroir du doseur de carburant coulisse à l'intérieur de la douille 24 de telle sorte que la fente de dosage 34' soit en grande partie découverte (seule la section de passage étroit 34'a de la fente de dosage est masquée par l'arête secondaire 40' de la lumière 36' de la douille, le reste de la fente de dosage étant découverte et permet le passage du carburant depuis la section de passage de carburant 32 vers le conduit d'utilisation).

Dans cette position de grand débit, le bord de la lumière 36' de la douille formant l'arête secondaire 40' vient masquer la section de passage étroit 34'a de la fente de dosage pour éviter tout passage de carburant par cette partie de la fente de dosage, et ainsi que des particules de glace provenant du givrage du carburant ne viennent s'y agglomérer. De la sorte, lorsque le doseur de carburant 12-4 repasse de cette position de grand débit à la position de petit débit des figures 6A-6B où seule la section de passage étroit 34'a de la fente de dosage 34' est découverte, le passage de carburant par cette section de passage n'est perturbé par aucune particule de glace.

Quel que soit le mode de réalisation du doseur de carburant selon l'invention, on notera que la forme de la découpe de la fente de dosage 34, 34' est adaptée pour largement compenser à grand débit son obturation partielle par l'arête secondaire 40, 40' au niveau de la section de passage étroit 34a, 34'a de la fente de dosage. Un profil de forme exponentielle pour la fente de dosage est à ce titre particulièrement adaptée pour ce résultat, puisqu'à grand débit, un faible déplacement du tiroir vers la position de débit maximum augmente substantiellement la section découverte de la fente de dosage, le débit gagné du côté de la section de passage large de la fente de dosage lors de ce faible déplacement du tiroir étant beaucoup plus important que le débit perdu du côté de la section de passage étroit.

Il est entendu que l'application de l'invention n'est pas limitée au mode de réalisation d'un doseur à tiroir et douille décrit dans ce qui précède. L'invention s'applique également à la plupart des autres architectures connues de doseurs de carburant à ouverture géométrique variable, c'est à dire utilisant une fenêtre de passage de carburant et une lumière de dosage également appelée fente, la fenêtre et la fente étant déplaçables l'une par rapport à l'autre de façon à faire varier la section de l'ouverture définie par la superposition des deux éléments.

Parmi ces autres architectures connues, on peut mentionner notamment les doseurs à boisseau rotatif, dans lesquels la fenêtre de passage de carburant est pratiquée dans un cylindre pouvant être déplacé en rotation par rapport à son axe, la lumière de dosage étant pratiquée dans une paroi fixe partiellement cylindrique qui se superpose radialement au cylindre rotatif. On peut mentionner également les doseurs à plaque coulissante ou rotative, dans lesquels la fenêtre de passage de carburant est pratiquée dans une plaque mobile en translation ou en rotation, la lumière de dosage étant pratiquée dans une plaque fixe également appelée contre-plaque qui se superpose à la plaque mobile selon une direction axiale correspondant à la direction d'écoulement du carburant.

En prévoyant que la fenêtre de passage de carburant ait une longueur, axiale ou circonférentielle selon l'architecture du doseur, substantiellement inférieure à la longueur de la lumière (fente) de dosage, il est possible de masquer la partie étroite de la lumière de dosage alors que la plus grande partie de la section de la lumière est découverte par la fenêtre. Cette disposition permet ainsi de protéger la partie étroite de la fente vis-à-vis de la formation de glace en cas de givrage du carburant tout en assurant un grand débit de carburant.

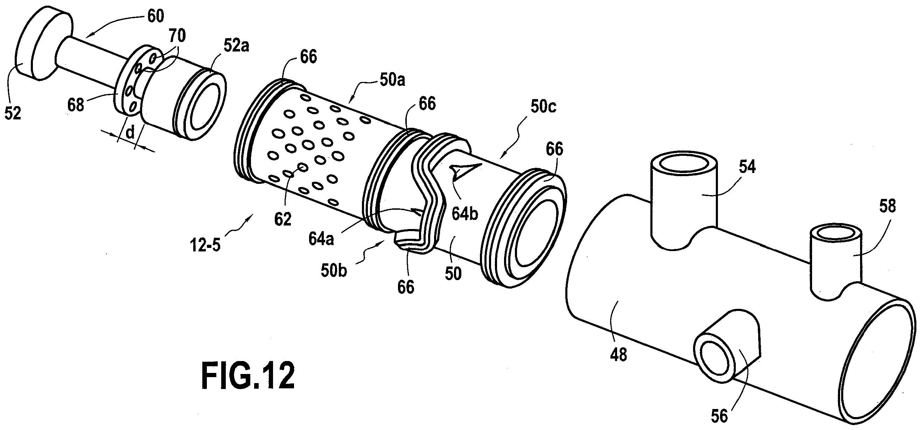

En liaison avec la figure 12, on décrira maintenant un doseur de carburant 12-5 qui n'entre pas dans le cadre de l'invention revendiquée. Ce doseur de carburant est proche de celui décrit dans la publication FR 2825120 A1.

Ce doseur de carburant 12-5 comprend une enveloppe externe cylindrique 48 à l'intérieur de laquelle est monté un cylindre 50 formant distributeur. Dans ce cylindre 50 fixe est monté un piston 52 pouvant se déplacer axialement de façon continue entre deux positions extrêmes.

L'enveloppe externe 48 comprend un conduit d'alimentation en carburant 54 et deux conduits d'utilisation, à savoir un conduit d'utilisation 56 servant pour les injections à petits débits de carburant, et un conduit d'utilisation 58 servant pour les injections à grands débits de carburant.

Le piston 52 comporte une lumière annulaire 60 formant chambre de distribution pour le dosage du carburant. Le déplacement du piston dans le cylindre 50 est par exemple actionné par un élément électromagnétique.

Le cylindre 50 comprend plusieurs zones pour la distribution du carburant : une première zone 50a destinée à coopérer avec l'orifice d'entrée 54 pour recevoir le carburant et comprenant une pluralité d'orifices d'alimentation 62, une deuxième zone 50b destinée à coopérer avec le conduit d'utilisation 56 servant pour les injections à petits débits de carburant et comprenant au moins une section de passage étroit 64a d'une fente de dosage, et une troisième zone 50c destinée à coopérer avec le conduit d'utilisation 58 servant pour les injections à grands débits de carburant et comprenant au moins une section de passage large 64b de la fente de dosage. Les trois zones 50a, 50b et 50c sont délimitées par des joints annulaires d'étanchéité 66.

Par ailleurs, le piston 52 porte un disque 68 disposé au sein de la lumière annulaire 60. Ce disque 68 est destiné à former un moyen d'obstruction de la (ou des) section(s) de passage étroit 64a de la fente de dosage du cylindre 50 lorsque le doseur est en position de grand débit. Pour que ce disque 68 ne vienne obstruer aucune partie de la (ou les) section(s) de passage large 64b de la fente de dosage, il est espacé axialement d'une partie d'extrémité correspondante 52a du piston d'une distance d correspondant sensiblement à la longueur de la section de passage large 64b. Ainsi, dans la position de grand débit, la totalité ou la quasi-totalité de la (ou les) section(s) de passage large 64b de la fente de dosage est découverte par le piston 52 en étant située radialement au regard de l'espace ménagé entre le disque 68 et la partie d'extrémité 52a du piston. Dans cette position de grand débit, la paroi circonférentielle annulaire du disque 68 obstrue au moins en partie la (ou les) section(s) de passage étroit 64a de la fente de dosage. L'épaisseur du disque 68 dans la direction axiale peut être prévue au moins égale à la longueur de la section de passage étroit 64a de façon à complètement recouvrir cette section dans la position de grand débit.

De plus, on notera que le disque 68 est muni de perçages 70 pour permettre au carburant de circuler dans la lumière 60 du piston. Tout autre moyen permettant au carburant de circuler d'un côté à l'autre du moyen d'obstruction est envisageable. Par exemple, au lieu d'un disque, le moyen d'obstruction peut consister en un secteur de disque, ou en deux secteurs de disques diamétralement opposés dans le cas où le doseur comprend une deuxième fente de dosage. Les espaces hors secteur(s) dans la direction circonférentielle constituent alors des passages pour le carburant.

On notera que les sections de passage étroit 64a et large 64b de la fente de dosage forment ici deux parties disjointes l'une de l'autre. A cet effet, elles peuvent être décalées circonférentiellement l'une de l'autre comme représenté sur la figure 12. Dans une variante non représentée, l'espacement entre la section de passage étroit et la section de passage large de la fente de dosage peut être axial, cet espacement axial devant généralement être supérieur à la longueur axiale de la section de passage large.

La largeur maximum de la (ou des) section(s) de passage étroit 64a de la fente de dosage est préférablement égale à la largeur minimum de la (ou les) section(s) de passage large 64b de la fente de dosage. De cette façon, la variation du débit de carburant alimentant les injecteurs de combustion est continue sur la course prédéterminée du piston entre la position de petit débit et la position de grand débit.

La largeur maximum de la (ou des) section(s) de passage étroit 64a de la fente de dosage est par ailleurs avantageusement comprise entre 0,5 mm et 1 mm. La valeur sera choisie de façon à ce que les particules de glace du carburant à température négative n'aient pas la capacité de former un pont entre les deux bords de la fente au-delà de cette largeur maximum. Cela permet de ne pas voir apparaître de ponts de particules de glace dans la (ou les) section(s) de passage large 64b de la fente de dosage, même dans sa partie la moins large. Les particules de glace qui ont naturellement tendance à s'accrocher aux bords de la fente sont décrochées par le flux du carburant traversant la section de passage large 64b, permettant ainsi que le givre ne vienne pas s'agglomérer dans cette section de la fente.

## Revendications

1. Doseur de carburant (12-1 à 12-4) apte à fonctionner en condition de givrage du carburant, comprenant un élément mobile (22) comportant au moins une section de passage de carburant (32 ; 32') s'ouvrant en amont vers un conduit d'alimentation en carburant et débouchant à l'aval vers un conduit d'utilisation par une fente de dosage (34 ; 34') à profil évasé ayant une section de passage étroit (34a ; 34'a) et une section de passage large (34b ; 34'b), l'élément mobile étant apte à être déplacé par rapport à un élément fixe (24) uniquement sur une course prédéterminée entre une position de petit débit dans laquelle le carburant passe au travers de la section de passage étroit de la fente de dosage qui est alors en grande partie obstruée et une position de grand débit dans laquelle le carburant passe au travers de la section de passage large de la fente de dosage qui est alors en grande partie découverte, la fente de dosage étant pratiquée dans l'élément fixe ou dans l'élément mobile et son obstruction étant obtenue par le recouvrement de la fente par une paroi de l'élément mobile ou de l'élément fixe, le doseur comportant en outre des moyens d'obstruction (40 ; 40') pour obstruer au moins en partie la section de passage étroit de la fente de dosage lorsque le doseur est en position de grand débit sans jamais obstruer la section de passage large de ladite fente de dosage et ainsi éviter un colmatage au moins partiel de la section de passage étroit en condition givrante.

2. Doseur (12-1 à 12-3 ; 12-3') selon la revendication 1, dans lequel la fente de dosage (34) est pratiquée dans l'élément fixe (24) et débouche dans la section de passage de carburant (32 ; 32') par l'intermédiaire d'une lumière (36) pratiquée dans l'élément mobile et délimitée longitudinalement entre une arête principale (38) et une arête secondaire (40), ladite lumière ayant une longueur (L1) plus courte qu'une longueur (L2) de la fente de dosage et étant apte à se déplacer en regard de celle-ci de sorte à obstruer au moins en partie la section de passage étroit (34a) de la fente de dosage lorsque le doseur est en position de grand débit.

3. Doseur (12-1) selon la revendication 2, dans lequel l'élément fixe forme une douille (24) qui comprend une fenêtre (39) s'ouvrant en amont vers le conduit d'alimentation en carburant et débouchant dans la section de passage de carburant, ladite fenêtre étant décalée longitudinalement par rapport à la fente de dosage (34).

4. Doseur selon la revendication 3, dans lequel l'élément mobile forme un tiroir (22) apte à coulisser longitudinalement dans la douille (24), et l'arête secondaire (40) est formée par un épaulement faisant saillie dans la section de passage de carburant (32) entre deux portées (26, 28) du tiroir (22).

5. Doseur selon la revendication 4, dans lequel l'épaulement est un élément rapporté sur le tiroir.

6. Doseur (12-2) selon la revendication 2, dans lequel l'élément fixe (24) comprend une fenêtre (42) s'ouvrant en amont vers le conduit d'alimentation en carburant et débouchant dans la section de passage de carburant (32'), ladite fenêtre étant, de façon alternative, alignée longitudinalement avec la fente de dosage (34) en référence à un axe longitudinal de la structure d'écoulement.

7. Doseur (12-3 ; 12-3') selon la revendication 2, dans lequel l'élément fixe (24) comprend en outre un orifice (44) débouchant dans la section de passage de carburant et s'ouvrant vers un conduit d'utilisation, ledit orifice étant obstrué par l'arête secondaire (40) de la lumière (36) de l'élément mobile lorsque celui-ci est en position de grand débit et découvert lorsqu'il est en position de petit débit.

8. Doseur (12-3') selon la revendication 7, dans lequel l'arête secondaire (40) de l'élément mobile présente un profil profilé de sorte à permettre d'obstruer l'orifice dès que la section de passage étroit (34a) de la fente de dosage commence à être obstruée.

9. Doseur selon la revendication 2, dans lequel l'élément fixe (24) comprend en outre un orifice (44) s'ouvrant vers un conduit d'utilisation, et l'élément mobile comprend une lumière additionnelle au travers de laquelle la section de passage de carburant débouche vers le conduit d'utilisation, ladite lumière additionnelle étant apte à se déplacer en regard dudit orifice de sorte à pouvoir l'obstruer lorsque le doseur est en position de grand débit.

10. Doseur (12-4) selon la revendication 1, dans lequel la fente de dosage (34') est pratiquée dans l'élément mobile (22) en regard de la section de passage de carburant (32) et débouche vers le conduit d'utilisation par l'intermédiaire d'une lumière (36') pratiquée dans l'élément fixe et délimitée longitudinalement entre une arête principale (38') et une arête secondaire (40'), ladite lumière ayant une longueur (L1) plus courte qu'une longueur (L2) de la fente de dosage et la fente de dosage étant apte à se déplacer en regard de la lumière de sorte à ce qu'au moins une partie de la section de passage étroit (34'a) de la fente de dosage soit obstruée lorsque le doseur est en position de grand débit.

11. Doseur selon la revendication 10, dans lequel l'élément fixe (24) comprend une fenêtre (39) s'ouvrant en amont vers le conduit d'alimentation en carburant et débouchant dans la section de passage de carburant (32), ladite fenêtre étant décalée longitudinalement par rapport à la lumière (36').

12. Doseur selon l'une quelconque des revendications 1 à 11, dans lequel l'élément mobile (22) comporte au moins deux portées (26, 28) et ladite au moins une section de passage de carburant (32 ; 32') est située entre lesdites portées.

13. Doseur selon l'une quelconque des revendications 1 à 12, dans lequel la fente de dosage (34 ; 34') a une section de passage étroit s'évasant jusqu'à une section de passage large.

14. Doseur selon l'une quelconque des revendications 1 à 13, dans lequel la section de passage étroit de la fente de dosage possède une largeur présentant un maximum compris entre 0,5 mm et 1 mm.

15. Circuit d'alimentation en carburant (2) d'un moteur d'aéronef, comportant un système de pompage basse pression (4) relié à un système de pompage haute pression (6), et un doseur de carburant (12-1 à 12-4) selon l'une quelconque des revendications 1 à 14 dont la section de passage de carburant (32 ; 32') débouche vers l'aval vers des injecteurs (14) de chambre de combustion du moteur.

## Patentansprüche

1. Kraftstoffmessvorrichtung (12-1 bis 12-4), die imstande ist, unter Vereisungsbedingung des Kraftstoffs zu arbeiten, umfassend ein bewegliches Element (22), das mindestens einen Kraftstoffdurchgangsabschnitt (32; 32') aufweist, der sich stromaufwärts zu einer Kraftstoffversorgungsleitung öffnet und stromabwärts zu einer Nutzungsleitung mittels eines Dosierschlitzes (34; 34') mit erweitertem Profil mit einem engen Durchgangsabschnitt (34a; 34'a) und einem weiten Durchgangsabschnitt (34b; 34'b) ausmündet, wobei das bewegliche Element imstande ist, im Verhältnis zu einem festen Element (24) nur auf einem vorher festgelegten Weg zwischen einer Position eines kleinen Durchflusses, in welcher der Kraftstoff durch den engen Durchgangsabschnitt des Dosierschlitzes fließt, der dann zu einem großen Teil verschlossen ist, und einer großen Durchflussposition, in welcher der Kraftstoff durch den weiten Durchgangsabschnitt des Dosierschlitzes fließt, der dann zu einem großen Teil offen ist, verlagert zu werden, wobei der Dosierschlitz in das feste Element oder in das bewegliche Element eingearbeitet ist und sein Verschluss durch Bedecken des Schlitzes mit einer Wand des beweglichen Elements oder des festen Elements erhalten wird, wobei die Messvorrichtung ferner Verschlussmittel (40; 40') aufweist, um den engen Durchgangsabschnitt des Dosierschlitzes mindestens teilweise zu verschließen, wenn die Messvorrichtung in großer Durchflussposition ist, ohne jemals den weiten Durchgangsabschnitt des Dosierschlitzes zu verschließen und somit eine mindestens teilweise Verstopfung des engen Durchgangsabschnitts unter Vereisungsbedingung zu verhindern.

2. Messvorrichtung (12-1 bis 12-3; 12-3') nach Anspruch 1, wobei der Dosierschlitz (34) in das feste Element (24) eingearbeitet ist und in den Kraftstoffdurchgangsabschnitt (32; 32') über eine Öffnung (36) ausmündet, die in das bewegliche Element eingearbeitet ist und längs zwischen einer Hauptkante (38) und einer sekundären Kante (40) begrenzt ist, wobei die Öffnung eine Länge (L1) hat, die kürzer als eine Länge (L2) des Dosierschlitzes ist und imstande ist, sich diesem zugewandt derart zu verlagern, dass der enge Durchgangsabschnitt (34a) des Dosierschlitzes mindestens teilweise verschlossen wird, wenn die Messvorrichtung in großer Durchflussposition ist.

3. Messvorrichtung (12-1) nach Anspruch 2, wobei das feste Element eine Hülse (24) bildet, die ein Fenster (39) umfasst, das sich stromaufwärts zur Kraftstoffversorgungsleitung öffnet und in den Kraftstoffdurchgangsabschnitt ausmündet, wobei das Fenster im Verhältnis zum Dosierschlitz (34) längs versetzt ist.

4. Messvorrichtung nach Anspruch 3, wobei das bewegliche Element einen Schieber (22) bildet, der imstande ist, längs in der Hülse (24) zu gleiten, und die sekundäre Kante (40) von einem Absatz gebildet ist, der in den Kraftstoffdurchgangsabschnitt (32) zwischen zwei Sitzen (26, 28) des Schiebers (22) hineinragt.

5. Messvorrichtung nach Anspruch 4, wobei der Absatz ein auf dem Schieber angebrachtes Element ist.

6. Messvorrichtung (12-2) nach Anspruch 2, wobei das feste Element (24) ein Fenster (42) umfasst, das sich stromaufwärts zur Kraftstoffversorgungsleitung öffnet und in den Kraftstoffdurchgangsabschnitt (32') ausmündet, wobei das Fenster alternativ längs mit dem Dosierschlitzes (34) in Bezug auf eine Längsachse der Fließstruktur fluchtet.

7. Messvorrichtung (12-3; 12-3') nach Anspruch 2, wobei das feste Element (24) ferner ein Loch (44) umfasst, das in den Kraftstoffdurchgangsabschnitt ausmündet und sich zu einer Nutzungsleitung öffnet, wobei das Loch von der sekundären Kante (40) der Öffnung (36) des beweglichen Elements verschlossen wird, wenn dieses in großer Durchflussposition ist, und geöffnet, wenn es in kleiner Durchflussposition ist.

8. Messvorrichtung (12-3') nach Anspruch 7, wobei die sekundäre Kante (40) des beweglichen Elements ein profiliertes Profil aufweist, so dass es möglich ist, das Loch zu verschließen, sobald der enge Durchgangsabschnitt (34a) des Dosierschlitzes beginnt, verschlossen zu sein.

9. Messvorrichtung nach Anspruch 2, wobei das feste Element (24) ferner ein Loch (44) umfasst, das sich zu einer Nutzungsleitung öffnet, und das bewegliche Element eine zusätzliche Öffnung umfasst, durch die der Kraftstoffdurchgangsabschnitt zu der Nutzungsleitung ausmündet, wobei die zusätzliche Öffnung imstande ist, sich dem Loch zugewandt derart zu verlagern, dass sie es verschließen kann, wenn die Messvorrichtung in großer Durchflussposition ist.

10. Messvorrichtung (12-4) nach Anspruch 1, wobei der Dosierschlitz (34') in das bewegliche Element (22) dem Kraftstoffdurchgangsabschnitt (32) zugewandt eingearbeitet ist und zur Nutzungsleitung über eine Öffnung (36') ausmündet, die in das feste Element eingearbeitet ist und längs zwischen einer Hauptkante (38') und einer sekundären Kante (40') begrenzt ist, wobei die Öffnung eine Länge (L1) hat, die kürzer als eine Länge (L2) des Dosierschlitzes ist und der Dosierschlitz imstande ist, sich der Öffnung zugewandt derart zu verlagern, dass mindestens ein Teil des engen Durchgangsabschnitts (34'a) des Dosierschlitzes verschlossen wird, wenn die Messvorrichtung in großer Durchflussposition ist.

11. Messvorrichtung nach Anspruch 10, wobei das feste Element (24) ein Fenster (39) umfasst, das sich stromaufwärts zur Kraftstoffversorgungsleitung öffnet und in den Kraftstoffdurchgangsabschnitt (32) ausmündet, wobei das Fenster im Verhältnis zur Öffnung (36') längs versetzt ist.

12. Messvorrichtung nach einem der Ansprüche 1 bis 11, wobei das bewegliche Element (22) mindestens zwei Sitze (26, 28) aufweist und sich der mindestens eine Kraftstoffdurchgangsabschnitt (32; 32') zwischen den zwei Sitzen befindet.

13. Messvorrichtung nach einem der Ansprüche 1 bis 12, wobei der Dosierschlitz (34; 34') einen engen Durchgangsabschnitt hat, der sich bis zu einem weiten Durchgangsabschnitt erweitert.

14. Messvorrichtung nach einem der Ansprüche 1 bis 13, wobei der enge Durchgangsabschnitt des Dosierschlitzes eine Breite besitzt, die ein Maximum aufweist, die zwischen 0,5 mm und 1 mm liegt.

15. Kraftstoffversorgungskreis (2) eines Flugzeugmotors, aufweisend ein Niederdruck-Pumpsystem (4), das mit einem Hochdruck-Pumpsystem (6) verbunden ist, und eine Kraftstoffmessvorrichtung (12-1 bis 12-4) nach einem der Ansprüche 1 bis 14, deren Kraftstoffdurchgangsabschnitt (32; 32') stromabwärts zu Verbrennungskammerinjektoren (14) des Motors ausmündet.

## Claims

1. Fuel metering unit (12-1 to 12-4) able to operate under icing conditions of the fuel, comprising a movable element (22) including at least one fuel flow section (32; 32') opening upstream towards a fuel supply duct and opening downstream towards an utilization duct through a metering slot (34; 34') with a flared profile having a narrow flow section (34a; 34'a) and a wide flow section (34b; 34'b), the movable element being able to be moved relatively to a stationary element (24) only over a predetermined stroke between a low flow rate position in which the metering slot is for a large part obstructed and a high flow rate position in which the metering slot is for a large part exposed, the metering slot being made in the stationary element or in the movable element and its obstruction being obtained by covering the slot with a wall of the movable element or of the stationary element, the metering unit further including obstruction means (40; 40') for obstructing at least partly the narrow flow section of the metering slot when the metering unit is in the high flow rate position, without ever obstructing the wide flow section of said metering slot and thus avoiding a clogging at least partial of the narrow flow section under icing conditions.

2. Metering unit (12-1 to 12-3; 12-3') according to claim 1, wherein the metering slot (34) is made in the stationary element (24) and opens into the fuel flow section (32; 32') via an opening (36) made in the movable element and longitudinally delimited between a main edge (38) and a secondary edge (40), said opening having a shorter length (L1) than a length (L2) of the metering slot and being able to move facing the latter so as to at least partly obstruct the narrow flow section (34a) of the metering slot when the metering unit is in the high flow rate position.

3. Metering unit (12-1) according to claim 2, wherein the stationary element forms a bushing (24) which comprises a window (39) opening upstream towards the fuel supply duct and opening into the fuel flow section, said window being longitudinally shifted with respect to the metering slot (34) .

4. Metering unit according to claim 3, wherein the movable element forms a slider (22) able to longitudinally slide in the bushing (24), and the secondary edge (40) is formed by a shoulder protruding into the fuel flow section (32) between two seat faces (26, 28) of the slider (22).

5. Metering unit according to claim 4, wherein the shoulder is an element added on the slider.

6. Metering unit (12-2) according to claim 2, wherein the stationary element (24) comprises a window (42) opening upstream towards the fuel supply duct and opening into the fuel flow section (32'), said window being alternatively longitudinally aligned with the metering slot (34) with reference to a longitudinal axis of the flow structure.

7. Metering unit (12-3; 12-3') according to claim 2, wherein the stationary element (24) further comprises an orifice (44) opening into the fuel flow section and opening towards an utilization duct, said orifice being obstructed by the secondary edge (40) of the opening (36) of the movable element when the latter is in the high flow rate position and exposed when it is in the low flow rate position.

8. Metering unit (12-3') according to claim 7, wherein the secondary edge (40) of the movable element has a profiled profile so as to allow obstruction of the orifice as soon as the narrow flow section (34a) of the metering slot begins to be obstructed.

9. Metering unit according to claim 2, wherein the stationary element (24) further comprises an orifice (44) opening towards an utilization duct, and the movable element comprises an additional opening through which the fuel flow section opens towards the utilization duct, said additional opening being able to be moved facing said orifice so as to be able to obstruct it when the metering unit is in the high flow rate position.

10. Metering unit (12-4) according to claim 1, wherein the metering slot (34') is made in the movable element (22) facing the fuel flow section (32) and opens towards the utilization duct via an opening (36') made in the stationary element and longitudinally delimited between a main edge (38') and a secondary edge (40'), said opening having a shorter length (L1) than a length (L2) of the metering slot and the metering slot being able to be moved facing the opening so that at least one portion of the narrow flow section (34'a) of the metering slot is obstructed when the metering unit is in the high flow rate position.

11. Metering unit according to claim 10, wherein the stationary element (24) comprises a window (39) opening upstream towards the fuel supply duct and opening into the fuel flow section (32), said window being longitudinally shifted with respect to the opening (36').

12. Metering unit according to any one of claims 1 to 11, wherein the movable element includes at least two seat faces (26, 28) and said at least one fuel flow section (32; 32') is located between said seat faces.

13. Metering unit according to any one of claims 1 to 12, wherein the metering slot (34; 34') has a narrow flow section that flares to a wide flow section.

14. Metering unit according to any one of claims 1 to 13, wherein the narrow flow section of the metering slot possesses a width having a maximum lying in the range 0.5 mm to 1 mm.

15. Fuel supply circuit (2) of an aircraft engine, including a low pressure pumping system (4) connected to a high pressure pumping system (6), and a fuel metering unit (12-1 to 12-4) according to any one of claims 1 to 14 for which the fuel flow section (32; 32') opens in the downstream direction towards combustion chamber injectors (14) of the engine.
